# FASCICULE DE BREVET EUROPEEN

(11) **EP 1 114 359 B1**
(45) Date de publication et mention de la délivrance du brevet: **07.09.2005**
(21) Numéro de dépôt: 00917164.6
(22) Date de dépôt: 07.04.2000
(51) Int. Cl.: G05B 19/042

(54) **OUTIL UNIVERSEL DE SUPERVISION ET DE PILOTAGE D'AUTOMATES**
ALLGEMEINES WERKZEUG ZUR ÜBERWACHUNG UND STEUERUNG VON SPEICHER-PROGRAMMIERBAREN-STEUERUNGEN
UNIVERSAL TOOL FOR SUPERVISING AND CONTROLLING AUTOMATONS

(30) Priorité: 16.04.1999 FR 9904821
(43) Date de publication de la demande: 11.07.2001
(73) Titulaire: Crouzet Automatismes, 26000 Valence (FR)
(72) Inventeur: CHOVIN, André, Thomson-CSF Prop. Intellectuelle, 94117 Arcueil Cedex (FR); CHATENAY, Alain, Thomson-CSF Prop. Intellectuelle, 94117 Arcueil Cedex (FR)
(74) Mandataire: Chaverneff, Vladimir
(86) Numéro de dépôt international: PCT/FR2000/000899
(87) Numéro de publication internationale: WO 2000/063752

(56) Documents cités:
- EP-A- 0 621 522
- FR-A- 2 752 315
- US-A- 5 428 526
- US-A- 5 469 150

## Description

La présente invention se rapporte à un outil universel de supervision et de pilotage d'automates.

Les automates dont il est question ici peuvent aussi bien être des micro-automates de petites dimensions (de quelques centimètres) que des automates de dimensions bien plus grandes, et ces appareils peuvent aussi bien piloter des machines diverses (moteurs, actionneurs, robots,...) que superviser des capteurs.

Les appareils connus de commande d'automates sont soit des superviseurs à usage général, complexes, coûteux et difficilement portables d'un type de plateforme à un autre et/ou difficilement personnalisables, soit des interfaces de dialogue et de paramétrage dédiées à un produit précis, dont les fonctionnalités sont réduites, figées et fermées, et qui sont également difficilement portables et personnalisables.

On connaît d'après le document EP-A-0 621 522 un système de pilotage d'automates, mais l'interface de pilotage de l'utilisateur est une simple fenêtre affichant différents symboles n'offrant que très peu de facilités d'utilisation et d'adaptabilité à différentes plate-formes.

La présente invention a pour objet un outil de supervision et de pilotage d'automates, outil qui soit doté de fonctionnalités nombreuses et puissantes, qui soit simple, économique et portable sur différentes plateformes, en particulier sur PC.

L'outil conforme à l'invention est un système de supervision et de pilotage d'automates à l'aide d'un micro-ordinateur relié à ces automates qui sont munis de leurs propres fonctions d'échange de données, et il est caractérisé en ce qu'il comporte un pilote d'interface d'automate et un tableur exécuté sur le micro-ordinateur et envoyant des ordres et/ou des données au pilote dont il reçoit des données, ce pilote échangeant par ailleurs des données et/ou des ordres avec au moins un automate via les moyens de communication du micro-ordinateur et de son système d'exploitation.

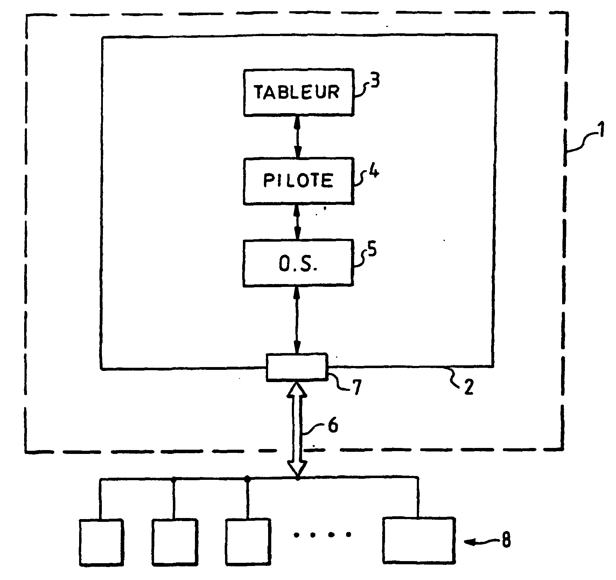

La présente invention sera mieux comprise à la lecture de la description détaillée d'un mode de réalisation, pris à titre d'exemple non limitatif et illustré par le dessin annexé dont la figure unique est un bloc-diagramme d'un outil conforme à l'invention.

L'outil 1 de la figure unique du dessin comporte un micro-ordinateur 2, par exemple de type PC. L'un des programmes dont est équipé ce micro-ordinateur est un tableur 3, par exemple de marque EXCEL. Ce tableur 3 envoie des ordres et/ou des données à un pilote d'interface d'automate 4 et en reçoit des données. Ce pilote 4 communique avec le système d'exploitation 5 du micro-ordinateur. Le système 5 a accès à au moins une ligne de communication 6 reliée à un port d'entrées-sorties 7 du micro-ordinateur. Cette ligne de communication 6 peut être de type série, parallèle ou un bus. La ligne 6 est reliée à un ensemble 8 d'automates.

Sous ce terme d'automates on désigne ici des composants d'automatisme « intelligents », c'est-à-dire munis au moins de moyens leur permettant de communiquer avec le micro-ordinateur 2 via la ligne de communication 6, au moins dans un sens, pour en recevoir des ordres et/ou des données et/ou pour lui transmettre des données (telles que des grandeurs physiques mesurées s'il s'agit de capteurs, ou des position s'il s'agit de composants mobiles, ou des états s'il s'agit de commutateurs, par exemple). De façon avantageuse, ces composants comportent une mémoire dans laquelle peuvent être mémorisées des données concernant leurs caractéristiques ou leur fonctionnement. Des exemples de tels composants sont des actionneurs, des senseurs, des servo-valves, des relais, des automates programmables,... ou bien des ensembles d'entrées/sorties déportées, c'est-à-dire des ensembles distincts du micro-ordinateur et des composants d'automatisme, reliés à la ligne 6 et comportant au moins un convertisseur analogique-numérique et/ou un convertisseur numérique-analogique, ainsi qu'un multiplexeur et/ou un démultiplexeur, ou bien encore des automates programmables qui comportent les mêmes fonctions que les ensembles d'entrées/sorties déportées, avec en sus la capacité d'exécuter par eux-mêmes des séquences d'automatismes.

Le pilote 4 permet de gérer et d'optimiser le dialogue entre le micro-ordinateur 2 et les automates 8 au travers du système d'exploitation 5. Il émule le langage propriétaire de commande et/ou de dialogue et/ou de paramétrage et/ou de téléchargement de programme des automates 8. Il organise en messages les ordres émanant du tableur pour les envoyer aux automates 8, et il extrait les données des messages parvenant des automates pour les transmettre sous forme appropriée au tableur. Ces messages doivent, bien entendu, être compatibles avec les caractéristiques de transmission sur la ligne 6.

La réalisation du pilote 4 est évidente pour l'homme de l'art connaissant ce langage propriétaire et la programmation du micro-ordinateur.

Les diverses fonctions de l'outil de l'invention sont les suivantes :
il permet de changer l'état de tout automate de l'ensemble 8 initialiser, démarrer, arrêter, paramétrer, tester tout automate, télécharger un programme dans tout automate,...).
il permet de modifier, le cas échéant, un ou plusieurs paramètres spécifiques de l'un au moins des automates 8 (par exemple : vitesse de rotation, s'il s'agit d'un moteur...).
il permet de lire itérativement, à une période définie (période d'échantillonnage compatible avec les caractéristiques du système d'exploitation 5) un ensemble de données rangées dans l'ordre (généralement croissant) dans une colonne ou dans une ligne du tableur 3, à raison d'un échantillon par cellule.

Il permet de faire varier dans le temps un attribut graphique (taille, couleur, position, plan,...) d'un dessin, d'une image, d'un film ou de tout objet dessinable ou importé dans le tableur, en fonction de la valeur numérique ou de l'état d'une donnée lue dans les mémoires d'un automate.

Il permet d'associer une action à un objet graphique ou à une interface de dialogue du tableur, en modifiant une donnée implantée dans la mémoire de l'automate.

Ainsi, l'utilisateur peut disposer d'un ensemble d'exemples d'actionnements et de dialogues pouvant être traités avec le tableur et sous un système de développement tel que « Visual Basic », « Visual C »,.... Il peut alors construire un « mini-superviseur » personnalisé tout en utilisant un autre outil bien connu et très largement utilisé, qui est le tableur. De plus, si le tableur est associé dynamiquement à au moins un autre programme, par exemple s'il fait partie d'un intégré tel qu' OFFICE, l'utilisateur peut, à l'aide de cet autre programme traiter, c'est-à-dire animer, stocker, présenter, analyser et classer toutes les données ou combinaisons de données issues des automates.

Bien entendu, le pilote 4 est conçu de telle façon qu'il ne perturbe pas les liens dynamiques entre le tableur et les programmes qui lui sont associés.

## Revendications

1. Système comportant un micro-ordinateur (2) relié à des automates (8) qui sont munis de leurs propres fonctions d'échange de données, les automates étant reliés à des capteurs et/ou à des actionneurs **caractérisé en ce que** le micro-ordinateur comporte un pilote d'interface d'automate (4) et un tableur exécuté sur le micro-ordinateur et envoyant des ordres et/ou des données au pilote dont il reçoit des données, ce pilote échangeant par ailleurs des données et/ou des ordres avec au moins un automate via les moyens de communication (6) du micro-ordinateur et de son système d'exploitation (5).

2. Système selon la revendication 1, **caractérisé par le fait que** les automates sont à entrées/sorties déportées, et que les capteurs et/ou actionneurs reliés aux automates sont « intelligents ».

3. Système selon l'une des revendications précédentes, **caractérisé par le fait que**, le tableur étant dynamiquement associé à au moins un autre programme, le système comprend des moyens de traitement des données issues des automates par cet autre programme.

## Patentansprüche

1. System mit einem Mikrocomputer (2), der mit Automaten (8) verbunden ist, die mit ihren eigenen Datenaustauschfunktionen versehen sind, wobei die Automaten mit Sensoren und/oder mit Stellantrieben verbunden sind, **dadurch gekennzeichnet, dass** der Mikrocomputer einen Automaten-Schnittstellentreiber (4) und ein Kalkulationsprogramm aufweist, das im Mikrocomputer ausgeführt wird und Befehle und/oder Daten an den Treiber schickt, von dem es Daten empfängt, wobei dieser Treiber außerdem Daten und/oder Befehle mit mindestens einem Automaten über die Kommunikationsmittel (6) des Mikrocomputers und sein Betriebssystem (5) austauscht.

2. System nach Anspruch 1, **dadurch gekennzeichnet, dass** die Automaten solche mit ausgelagerten Eingängen/Ausgängen sind und dass die mit den Automaten verbundenen Sensoren und/oder Stellantriebe "intelligent" sind.

3. System nach einem der vorhergehenden Ansprüche, **dadurch gekennzeichnet, dass** es, wenn das Kalkulationsprogramm dynamisch mit mindestens einem anderen Programm verbunden ist, Mittel zur Verarbeitung der von den Automaten kommenden Daten durch dieses andere Programm aufweist.

## Claims

1. System comprising a microcomputer (2) linked to automata (8) that are furnished with their own data exchange functions, the automata being linked to sensors and/or to actuators, **characterized in that** the microcomputer comprises an automaton interface controller (4) and a spreadsheet run on the microcomputer and sending orders and/or data to the controller from which it receives data, this controller moreover exchanging data and/or orders with at least one automaton via the means of communication (6) of the microcomputer and of its operating system (5).

2. System according to Claim 1, **characterized in that** the automata have remote inputs/outputs, and **in that** the sensors and/or actuators linked to the automata are "intelligent".

3. System according to one of the preceding claims, **characterized in that**, the spreadsheet being dynamically associated with at least one other program, the system comprises means of processing the data arising from the automata via this other program.
